# EUROPÄISCHE PATENTSCHRIFT

(11) **EP 3 630 514 B1**
(45) Veröffentlichungstag und Bekanntmachung des Hinweises auf die Patenterteilung: **30.06.2021**
(21) Anmeldenummer: 18727194.5
(22) Anmeldetag: 15.05.2018
(51) Int. Cl.: B60J 1/20, B60J 7/00

(54) **ROLLOANORDNUNG FÜR KRAFTFAHRZEUG**
ROLLER BLIND ARRANGEMENT FOR A MOTOR VEHICLE
SYSTÈME DE STORE POUR VÉHICULE À MOTEUR

(30) Priorität: 30.05.2017 DE 102017111734
(43) Veröffentlichungstag der Anmeldung: 08.04.2020
(73) Patentinhaber: Webasto SE, 82131 Stockdorf (DE)
(72) Erfinder: SCHULLER, Daniel, 82131 Stockdorf (DE); FRITZ, Tobias, 82131 Stockdorf (DE); GERING, Sebastian, 82131 Stockdorf (DE); SCHREIBER, Ulrich, 82131 Stockdorf (DE); ROCKELMANN, Andreas, 82131 Stockdorf (DE); RIEGGER, Marian, 82131 Stockdorf (DE)
(74) Vertreter: advotec.
(86) Internationale Anmeldenummer: PCT/EP2018/062493
(87) Internationale Veröffentlichungsnummer: WO 2018/219634

(56) Entgegenhaltungen:
- DE-A1-102013 102 630
- DE-U1-202004 000 631
- US-A- 5 881 792
- US-A1- 2008 029 224

## Beschreibung

Die Erfindung betrifft eine Rolloanordnung mit den Merkmalen des Oberbegriffs des Patentanspruchs 1.

Eine derartige Rolloanordnung ist aus der Praxis bekannt und dient bei einem Kraftfahrzeug zum Abschatten eines transparenten Dachabschnitts, der beispielsweise von einem Glasdeckel einer Schiebedachanordnung gebildet ist. Die Rolloanordnung umfasst hierzu als Beschattungselement eine Rollobahn, die aus einem Gewebe, einem Gewirke, einer Folie oder dergleichen hergestellt sein kann und die auf eine Wickelwelle aufwickelbar bzw. von der Wickelwelle abwickelbar ist, um den entsprechenden transparenten Fahrzeugabschnitt abzuschatten. Die Wickelwelle kann eine gekrümmte, fahrzeugfeste Lagerstrebe umfassen, die von einer flexiblen Hüllrohranordnung umgriffen ist, an der die Rollobahn mit einem sich in Rolloquerrichtung erstreckenden Rand angebunden ist. Die Hüllrohranordnung umfasst ein einen zentralen Abschnitt bildendes, beispielsweise als Wellrohr ausgebildetes Mittelrohr, das an seinen bezogen auf eine Rollolängsmittelebene beidseits angeordneten Enden jeweils mit einer Lagerbuchse versehen ist, die drehbar gelagert ist. Die Rollobahn ist an ihren seitlichen Rändern jeweils mit einem Führungsband versehen, das in einer fahrzeugfesten Führungsschiene geführt und jeweils an einer der Lagerbuchsen befestigt ist. Zum Aufwickeln der seitengeführten Rollobahn umfasst die Wickelwelle eine Wickelfeder, die die Lagerhülse und das Mittelrohr in Aufwickelrichtung vorspannt. Dies gewährleistet, dass die Rollobahn bei Freigabe eines Zugspriegels, der an der der Wickelwelle abgewandten Stirnseite der Rollobahn befestigt ist, selbsttätig auf die Wickelwelle aufgewickelt wird.

Das Mittelrohr der Hüllrohranordnung der Wickelwelle kann aus einem Kunststoffrohr bestehen. Temperatur- und/oder Feuchtigkeitsschwankungen können dann zu einer Längenänderung der Hüllrohranordnung führen, was die Verbindung zwischen der Rollobahn und der Wickelwelle beschädigen kann. Zudem können die resultierenden Verspannungen zu erhöhten Betätigungskräften oder sogar zu einem Verklemmen der Seitenführung führen. Die von der Wickelfeder ausgeübten Federkräfte, die insbesondere nur an einer der beiden Lagerbuchsen angreifen, können zudem Wellen und/oder Falten in der Rollobahn und einen einseitigen, übermäßigen Verschleiß hervorrufen.

Aus Druckschrift DE 10 2013 102 630 A1 ist eine Rolloanordnung mit einer Wickelwelle und einer Rollobahn bekannt. Die Wickelwelle umfasst ein Hüllrohr, welches an seinen beiden Enden jeweils mit einer Lagerhülse verbunden ist. An der Lagerhülse ist eine Rollfeder befestigt.

Druckschrift DE 20 2004 000 631 U1 offenbart ein Fahrzeugfensterrollo, das eine Rollobahn und ein Aufwickelrohr umfasst, wobei das Aufwickelrohr in Aufwickelrohrachsrichtung verlagerbar ist.

Der Erfindung liegt die Aufgabe zugrunde, eine gemäß der einleitend genannten Gattung ausgeführte Rolloanordnung zu schaffen, bei der im Bereich der Wickelwelle Spannungen aufgrund von Temperatur- und/oder Feuchtigkeitsschwankungen minimiert sind.

Diese Aufgabe ist erfindungsgemäß durch die Rolloanordnung mit den Merkmalen des Patentanspruchs 1 gelöst.

Es wird also eine Rolloanordnung vorgeschlagen, bei der die Wickelwelle eine Hüllrohranordnung mit seitlichen Lagerbuchsen umfasst, von denen zumindest eine gegenüber einem flexiblen Mittelrohr in axialer Richtung verlagerbar ist, so dass eine temperatur- und/oder feuchtigkeitsbedingte Längenänderung des Mittelrohrs ausgeglichen werden kann, ohne dass übermäßige Spannungen in die Rollobahn eingetragen werden und die Funktion der Rolloanordnung beeinträchtigt ist. Die mindestens eine axial gegenüber dem Mittelrohr verlagerbare Lagerbuchse ist insbesondere über eine axiale Gleitverbindung mit dem Mittelrohr verbunden. Die Gleitverbindung ermöglicht den Längenausgleich. Gleichzeitig können durch die drehfeste Anbindung Torsionsmomente zwischen dem Mittelrohr und der Lagerbuchse übertragen werden.

Zur Anbindung der Lagerbuchse an das beispielsweise als Kunststoffrohr ausgebildete Mittelrohr ist die Hüllrohranordnung bei einer bevorzugten Ausführungsform der Rolloanordnung nach der Erfindung mit einem drehfest an das Mittelrohr angebundenen Koppelelement versehen, das die Lagerbuchse, die gegenüber dem Mittelrohr in Hüllrohrlängsrichtung verlagerbar ist, mit dem Mittelrohr verbindet. Das Koppelelement, das eine Kunststoff-Umspritzung des Mittelrohrs sein kann, bildet den Gleitpartner für die ein Ausgleichselement darstellende Lagerbuchse.

Eine gegenüber dem Mittelrohr in Axialrichtung verlagerbare Lagerbuchse kann entweder an beiden Enden des Mittelrohrs oder auch nur an einem Ende des Mittelrohrs angeordnet sein. Der Längenausgleich ist damit entweder beidseitig oder einseitig realisiert.

Um die Position der Lagerbuchse gegenüber dem Mittelrohr eindeutig zu definieren und auch den maximalen Verfahrweg zwischen der Lagerbuchse und dem Mittelrohr zu definieren, weist die Lagerbuchse bei einer speziellen Ausführungsform der Rolloanordnung nach der Erfindung ein Führungselement auf, das in eine Führungsbahn des Koppelelements oder des Mittelrohrs eingreift. Die Länge der Führungsbahn definiert den maximalen Verfahrweg.

Das Führungselement dient vorzugsweise auch dazu, dass die Lagerbuchse verliersicher mit dem Mittelrohr verbunden ist. Hierzu kann das Führungselement von einer hakenförmigen, federelastischen Führungslasche gebildet sein, deren Hakenabschnitt in die Führungsbahn des Koppelelements oder des Mittelrohrs eingreift.

Die hakenförmige, federelastische Führungslasche hat vorzugsweise eine Auffahrrampe bzw. Schräge, welche ein elastisches Verbiegen der Führungslasche bei der Montage das Einführen der Lagerbuchse in das Koppelelement bzw. das Mittelrohr der Hüllrohranordnung erleichtert.

Um zu gewährleisten, dass die Lagerbuchse drehfest in dem Koppelelement oder dem Mittelrohr gehalten ist, hat die Lagerbuchse, die gegenüber dem Mittelrohr in Hüllrohrlängsrichtung verlagerbar ist, bei einer vorteilhaften Ausführungsform der Rolloanordnung nach der Erfindung ein Außenprofil, das in ein korrespondierendes Innenprofil des Koppelelements oder des Mittelrohrs eingreift. Alternativ kann eine Übertragung eines Torsionsmoments zwischen der Lagerbuchse und dem Mittelrohr auch nur über die mindestens eine oben beschriebene Führungslasche erfolgen, die insbesondere spielfrei in Umfangsrichtung der Lagerbuchse in der Führungsbahn des Koppelelements oder des Mittelrohrs gehalten ist.

Grundsätzlich kann eine Führungslasche vorgesehen sein, die in eine Führungsbahn des Koppelelements eingreift, oder es können mehrere, in Umfangsrichtung verteilte Führungslaschen vorgesehen sein, die jeweils in eine Führungsbahn des Koppelelements eingreifen.

Vorzugsweise ist die Position der Lagerbuchse auf der fahrzeugfesten Lagerstrebe eindeutig definiert. Hierzu kann die Lagerbuchse, die gegenüber dem Mittelrohr in Hüllrohrlängsrichtung verlagerbar ist, einen Ringbund aufweisen, über den sie sich an einer fahrzeugfesten Stützfläche abstützt, die beispielsweise an der Lagerstrebe ausgebildet ist.

Die Lagerbuchse, die gegenüber dem Mittelrohr in Hüllrohrlängsrichtung verlagerbar ist, dient bei einer speziellen Ausführungsform der Rolloanordnung nach der Erfindung auch zur Anbindung einer Wickelfeder, die einerseits mit der Lagerstrebe, das heißt mit einem fahrzeugfesten Bauelement, und andererseits mit der Hüllrohranordnung verbunden ist. Hierzu weist die Lagerbuchse vorzugsweise eine Ausnehmung und/oder einen Vorsprung auf, die bzw. der ein Einhängen der Wickelfeder ermöglicht.

Alternativ oder zusätzlich können die seitlichen Führungsbänder der Rollobahn jeweils als Rollfelder ausgebildet sein und das Aufwickeln der Rollobahn auf die Wickelwelle bewirken.

Die Lagerstrebe, die von der Hüllrohranordnung umgriffen ist, ist insbesondere gekrümmt ausgebildet, so dass die Rollobahn in ihrem ausgezogenen Zustand eine Wölbung haben kann, die einer Wölbung eines Fahrzeugdachs in Dachquerrichtung folgt. Die Hüllrohranordnung hat dann auch einen gekrümmten Verlauf.

Die Rollobahn ist vorzugsweise mit einem in Rolloquerrichtung verlaufenden Rand mit dem Mittelrohr verbunden, und zwar insbesondere in einem Zentralabschnitt des Mittelrohrs oder punktuell entlang des Mittelrohrs und kann dabei fest angebunden oder auch in Rolloquerrichtung frei beweglich sein, beispielsweise über eine Nut-Keder-Verbindung.

Die Rolloanordnung nach der Erfindung ist beispielsweise eine Rolloanordnung zum Beschatten eines transparenten Dachabschnitts eines Kraftfahrzeugs. So kann die Rolloanordnung Bestandteil einer Schiebedachanordnung sein, die ein transparentes verstellbares Deckelelement aufweist, mittels dessen eine Dachöffnung des betreffenden Fahrzeugs verschlossen werden kann. In diesem Falle bildet die Rolloanordnung also eine so genannte Schiebedachrolloanordnung.

Weitere Vorteile und vorteilhafte Ausgestaltungen des Gegenstandes der Erfindung sind der Beschreibung, der Zeichnung und den Patentansprüchen entnehmbar.

Eine bevorzugte Ausführungsform einer Rolloanordnung nach der Erfindung ist in der Zeichnung schematisch vereinfacht dargestellt und wird in der nachfolgenden Beschreibung näher erläutert. Es zeigt:

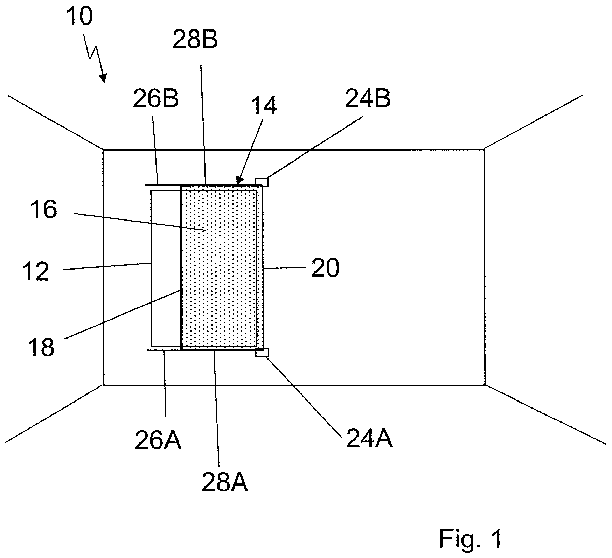

- Figur 1: eine Draufsicht auf ein Fahrzeugdach mit einer Rolloanordnung nach der Erfindung;
- Figur 2: einen schematischen Längsschnitt durch eine Wickelwelle der Rolloanordnung;

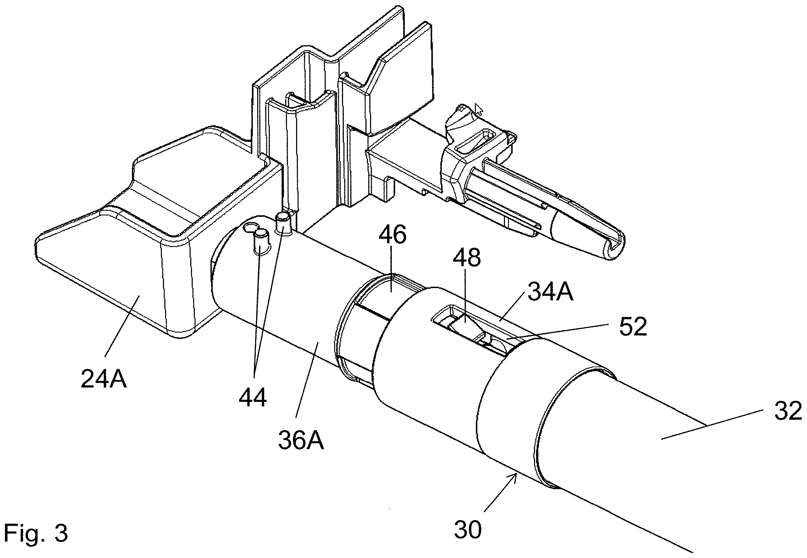

- Figur 3: einen ersten Lagerbereich der Wickelwelle in einer perspektivischen Draufsicht;

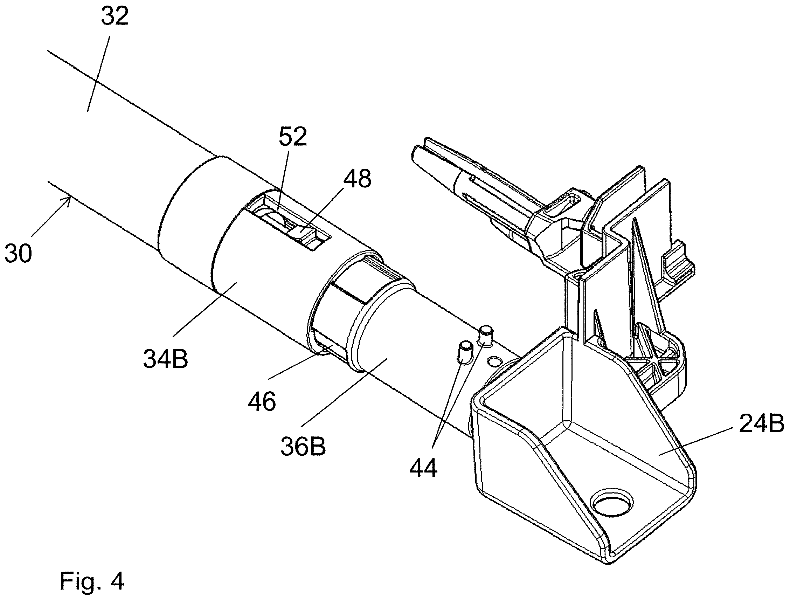

- Figur 4: einen zweiten Lagerbereich der Wickelwelle in einer perspektivischen Draufsicht;

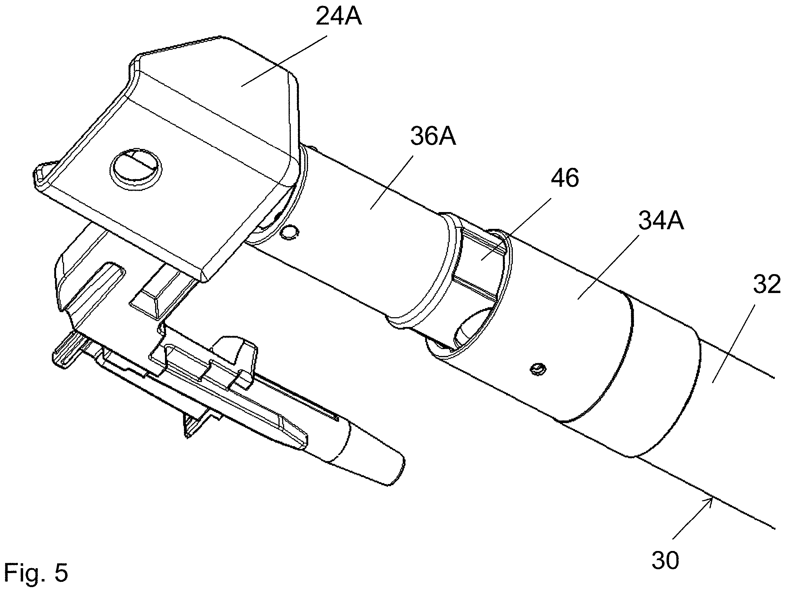

- Figur 5: eine perspektivische Unteransicht des ersten Lagerbereichs;

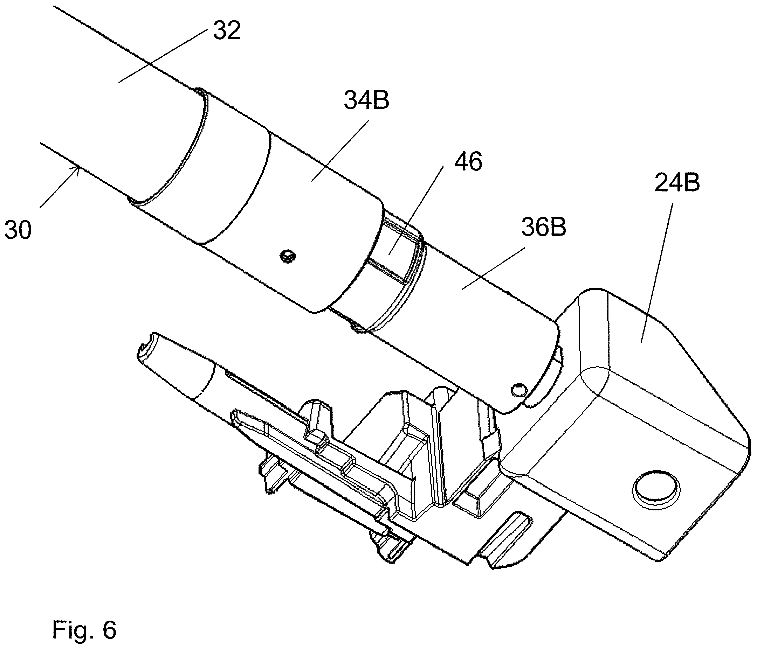

- Figur 6: eine perspektivische Unteransicht des zweiten Lagerbereichs;

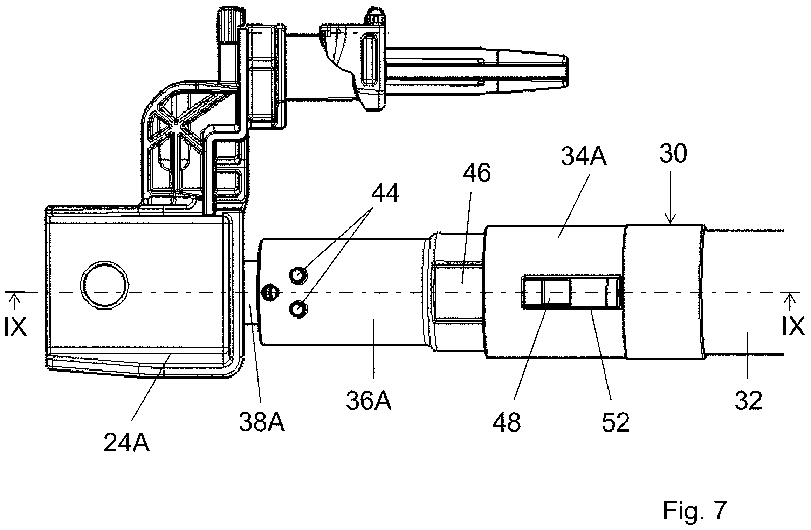

- Figur 7: eine Draufsicht auf den ersten Lagerbereich;

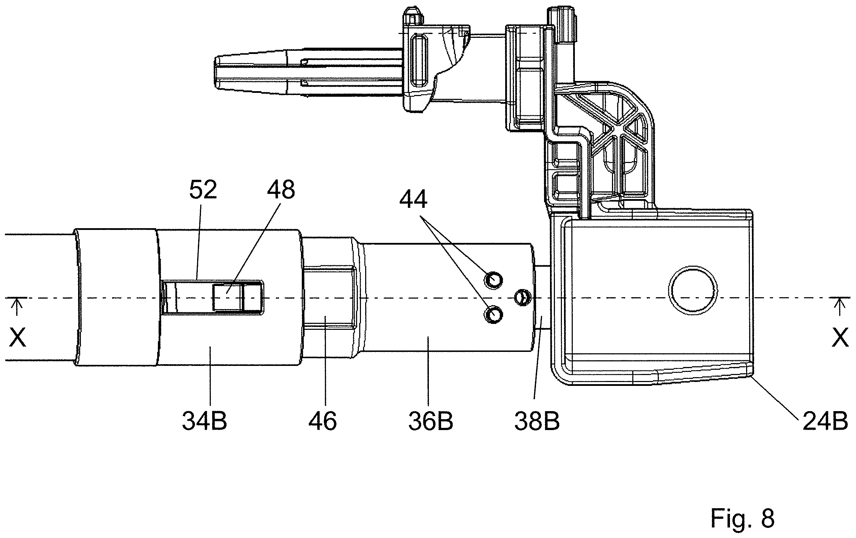

- Figur 8: eine Draufsicht auf den zweiten Lagerbereich;
- Figur 9: einen Längsschnitt durch den ersten Lagerbereich entlang der Linie IX-IX in Figur 7;

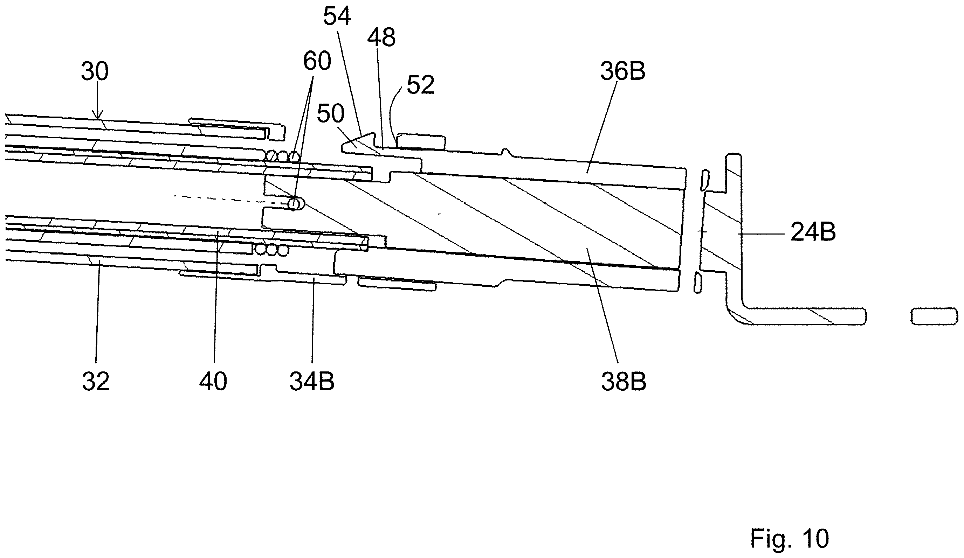

- Figur 10: einen Längsschnitt durch den zweiten Lagerbereich entlang der Linie X-X in Figur 8;

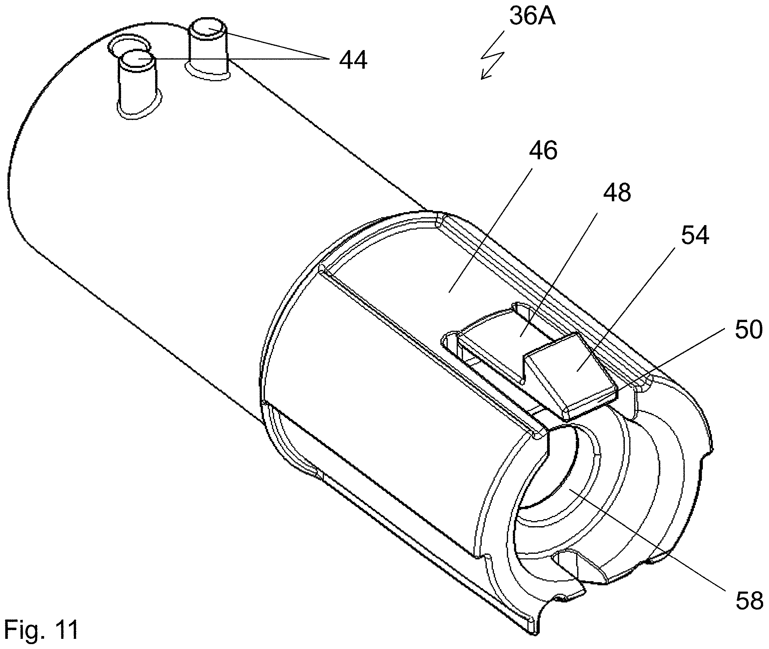

- Figur 11: eine perspektivische Draufsicht auf eine Lagerbuchse des ersten Lagerbereichs;
- Figur 12: eine weitere perspektivische Draufsicht auf die Lagerbuchse nach Figur 11 in einer um 180° gedrehten Stellung; und

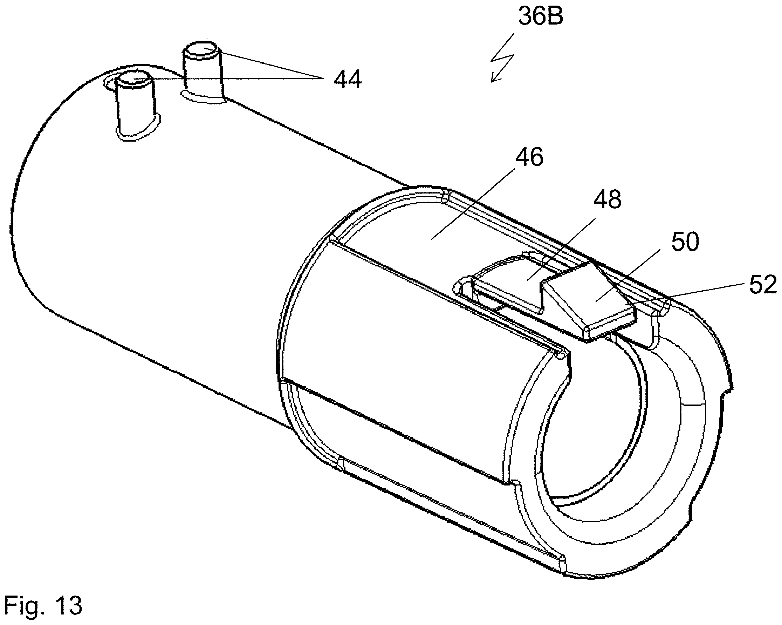

- Figur 13: eine perspektivische Draufsicht auf eine Lagerbuchse des zweiten Lagerbereichs.

In der Zeichnung ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements geschlossen oder zumindest teilweise freigegeben werden kann.

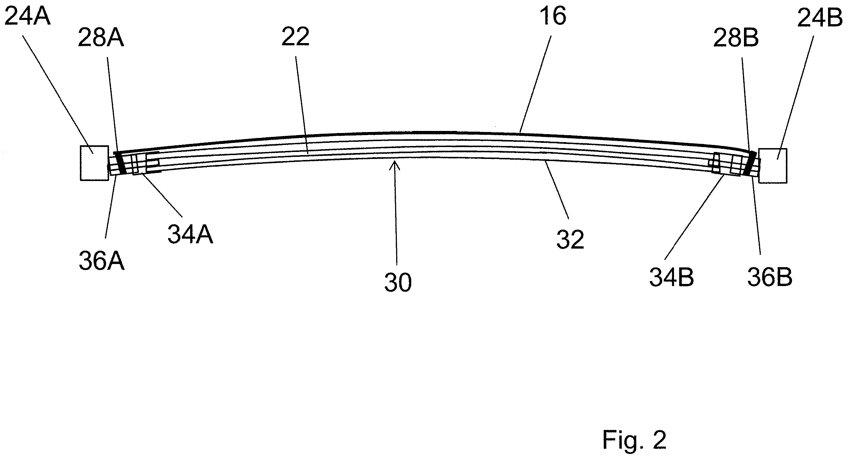

Das Fahrzeugdach 10 umfasst als Beschattungselement für den Dachausschnitt 12 eine Rolloanordnung 14, die eine Rollobahn 16 aus einem faltbaren bzw. wickelbaren, blickdichten Gewebe umfasst. An ihrem freien Rand weist die Rollobahn 16 einen sich in Fahrzeugquerrichtung erstreckenden Zugspriegel 18 auf. An ihrem dem Zugspriegel 18 abgewandten Rand ist die Rollobahn 16 an einer Wickelwelle 20 befestigt, die sich in Fahrzeugquerrichtung erstreckt. Die Wickelwelle 20, die in Figur 2 schematisch dargestellt ist, hat einen gekrümmten Verlauf in Fahrzeugquerrichtung und umfasst eine gekrümmte fahrzeugfeste Lagerstrebe 22, die bezogen auf eine vertikale Rollolängsmittelebene beidseits jeweils mit einem fahrzeugfesten Lagerelement 24A bzw. 24B verbunden ist. Die Lagerelemente 24A und 24B sind jeweils heckseitig an einer Führungsschiene 26A bzw. 26B angeordnet, welche sich in Fahrzeuglängsrichtung bzw. in Ausziehrichtung der Rollobahn 16 erstreckt und in welcher ein jeweiliger seitlicher Rand der Rollobahn 16 über ein mit der Rollobahn 16 verbundenes jeweiliges Führungsband 28A bzw. 28B geführt ist.

Die Wickelwelle 20 weist des Weiteren eine flexible Hüllrohranordnung 30 auf, welche die Lagerstrebe 22 umgreift. Die Hüllrohranordnung 30 umfasst ein flexibles als Wellrohr ausgebildetes Mittelrohr 32 aus Kunststoff, das an seinen bezogen auf die vertikale Rollolängsmittelebene beidseits angeordneten Rändern jeweils mit einer ein Koppelelement 34A bzw. 34B darstellenden Kunststoffumspritzung versehen ist, die bezüglich des Mittelrohrs 32 starr angeordnet ist. Über die Koppelelemente 34A und 34B ist an das Mittelrohr 32 beidseits jeweils eine Lagerbuchse 36A bzw. 36B angebunden. Die Lagerbuchsen 36A und 36B sind jeweils drehbar auf einem Lagerzapfen 38A bzw. 38B gelagert, der Bestandteil der Lagerstrebe 22 ist und an dem jeweiligen Lagerelement 24A bzw. 24B ausgebildet ist.

Die Lagerstrebe 22 umfasst neben den beidseits angeordneten Lagerzapfen 38A und 38B ein Zentralrohr 40, das an einem Ende über einen Verbindungsstift 42 mit dem Lagerzapfen 38A verbunden ist und am anderen Ende auf den Lagerzapfen 38B aufgesteckt ist.

Die bezogen auf die Vorwärtsfahrtrichtung des betreffenden Fahrzeugs links angeordnete Lagerbuchse 36A, die drehbar auf der Lagerstrebe 22 bzw. dessen Lagerzapfen 38A gelagert ist, weist an ihrem Umfang Fixierdorne 44 zum Anbinden des Führungsbandes 28A der Rollobahn 16 auf. In ihrem dem Lagerelement 24A abgewandten Endabschnitt hat die Lagerbuchse 36A am Umfang ein Außenprofil 46, das in ein korrespondierendes Innenprofil des Koppelelements 34A eingreift, wodurch eine drehfeste Verbindung zwischen der Lagerbuchse 36A und dem Koppelelement 34A und dem Mittelrohr 32 hergestellt ist. Das Außenprofil 46 bildet also eine Art Außenverzahnung, die in eine Innenverzahnung des Koppelelements 34A eingreift.

Des Weiteren umfasst die Lagerbuchse 36A eine hakenförmige, federelastische Führungslasche 48, die sich in Axialrichtung erstreckt und deren Hakenabschnitt 50 in der in der Zeichnung dargestellten Montagestellung in eine bezogen auf die Wickelwelle 20 axial ausgerichtete Führungsbahn 52 eingreift, die nach Art eines Fensters an der Kunststoffumspritzung bzw. dem Koppelelement 34A ausgebildet ist. Die Führungslasche 48 bzw. der Hakenabschnitt 50 der Führungslasche 50 hat eine Einführschräge 54, die bei der Montage das Einführen der Lagerbuchse 36A in das Koppelelement 34A erleichtert.

An ihrer dem Lagerelement 24A abgewandten Stirnseite hat die Lagerbuchse 36A einen radial nach innen weisenden Ringbund 56, der sich einerseits an dem Lagerzapfen 38A und andererseits an einem Ringbund 58 des Verbindungsstifts 42 der Lagerstrebe 22 abstützt und so bezogen auf die Axialrichtung der Wickelwelle 20 eine exakte Lage der Lagerbuchse 36A definiert.

Wie sich implizit aus der vorstehenden Beschreibung und der Zeichnung ergibt, ist die Lagerbuchse 36A gegenüber dem Mittelrohr 32 aufgrund des Außenprofils 46, das in das Innenprofil des Koppelelements 34A eingreift, drehfest angeordnet, aber gegenüber dem Mittelrohr 32 in Axialrichtung verschiebbar, wodurch Längenänderungen des Mittelrohrs 32 aufgrund von Temperatur- und/oder Feuchtigkeitsschwankungen ausgeglichen werden können.

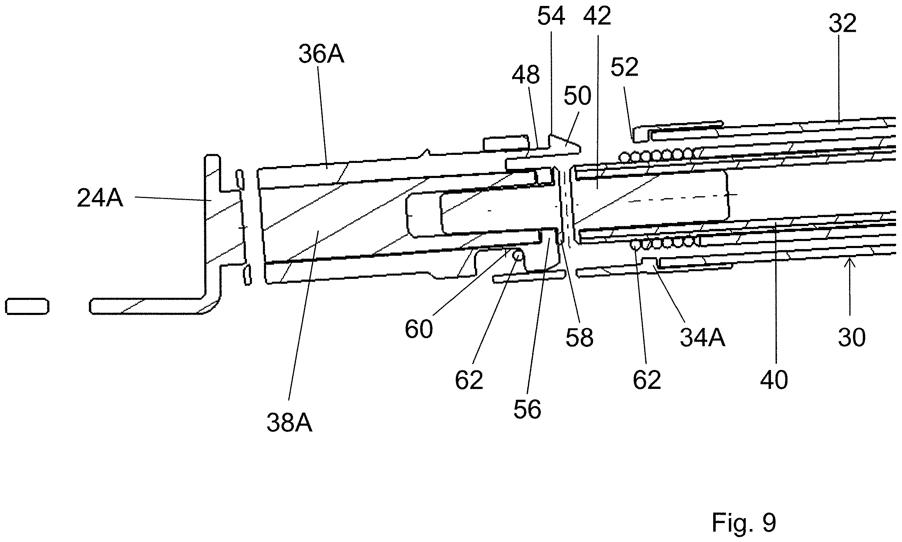

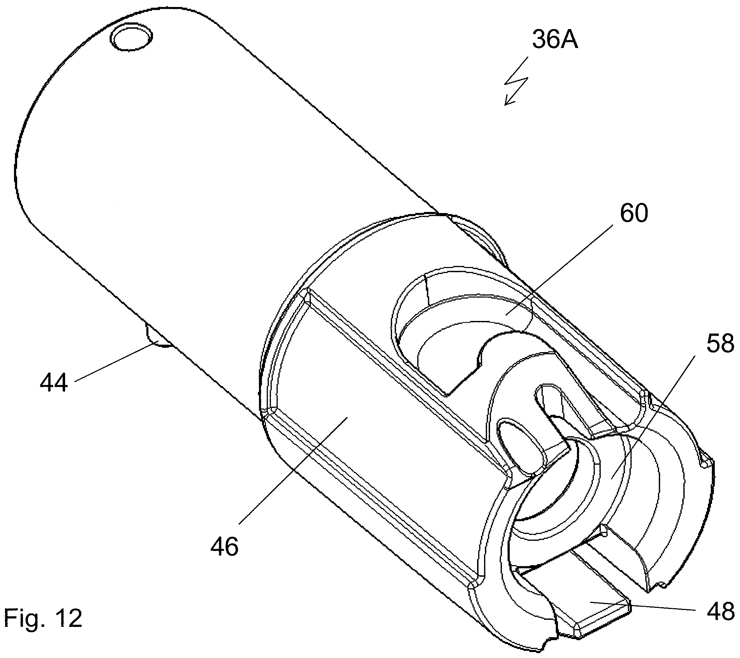

Wie insbesondere den Figuren 9 und 12 zu entnehmen ist, hat die Lagerbuchse 36 an ihrem Umfang eine einen nasenartigen Vorsprung begrenzende Aufnahme 60 zum Einhängen einer Wickelfeder 62, welche als Schraubenfeder entlang dem Zentralrohr 40 bis zu dem Lagerzapfen 38B der Lagerstrebe 22 geführt ist und dort mit ihrem dem Lagerelement 24A abgewandten Ende fahrzeugfest eingehängt ist. Die Wickelfeder 62 ist derart vorgespannt, dass die Hüllrohranordnung 30 eine dauerhafte Vorspannung in Aufwickelrichtung der Rollobahn 16 erfährt. Damit wird gewährleistet, dass sich die Rollobahn 16 bei einer Freigabe des Zugspriegels 18 selbsttätig auf die Wickelwelle 20 aufwickelt.

Die Lagerbuchse 36B, die an dem Lagerzapfen 38B drehbar gelagert ist, entspricht weitgehend der Lagerbuchse 36A, unterscheidet sich von dieser aber dadurch, dass sie keine Einhängevorrichtung für die Wickelfeder 62 in Form einer Aufnahme oder dergleichen und auch keinen in Richtung ihrer Achse nach innen vorspringenden Ringbund aufweist. Entsprechend der Lagerbuchse 36A weist die Lagerbuchse 36B aber Fixierdorne 44 für das Führungsband 28B, ein Außenprofil 46, das mit einem Innenprofil des Koppelelements 34B in Eingriff steht, und eine in eine fensterartige Führungsbahn 52 des Koppelelements 34B eingreifende Führungslasche 48 mit einem Hakenabschnitt 50 und einer Einführschräge 52 auf. Die Lagerbuchse 36B ist damit drehfest mit dem Koppelelement 34B bzw. dem Mittelrohr 32 der Hüllrohranordnung 30 verbunden, jedoch zur Aufnahme von Längenänderungen des Mittelrohrs 32 in axialer Richtung gegenüber dem Mittelrohr 32 verlagerbar.

### Bezugszeichenliste

- 10: Fahrzeugdach
- 12: Dachausschnitt
- 14: Rolloanordnung
- 16: Rollobahn
- 18: Zugspriegel
- 20: Wickelwelle
- 22: Lagerstrebe
- 24A, B: Lagerelement
- 26A, B: Führungsschiene
- 28A, B: Führungsband
- 30: Hüllrohranordnung
- 32: Mittelrohr
- 34A, B: Koppelelement
- 36A, B: Lagerbuchse
- 38A, B: Lagerzapfen
- 40: Zentralrohr
- 42: Verbindungsstift
- 44: Fixierdorne
- 46: Außenprofil
- 48: Führungslasche
- 50: Hakenabschnitt
- 52: Führungsbahn
- 54: Einführschräge
- 56: Ringbund
- 58: Ringbund
- 60: Aufnahme
- 62: Wickelfeder

## Patentansprüche

1. Rolloanordnung (14) für ein Kraftfahrzeug, umfassend eine Rollobahn (16), die an ihren bezogen auf eine Rollolängsmittelebene seitlichen Rändern jeweils ein Führungsband (28A, 28B) aufweist, eine Wickelwelle (20), auf die die Rollobahn (16) aufwickelbar ist oder von der die Rollobahn (16) abwickelbar ist und die eine flexible Hüllrohranordnung (30) umfasst, die von einer fahrzeugfesten Lagerstrebe (22) durchgriffen ist und ein flexibles Mittelrohr (32) umfasst, das an seinen beiden Enden jeweils drehfest mit einer Lagerbuchse (36A, 36B) versehen ist, an der jeweils eines der Führungsbänder (28A, 28B) der Rollobahn (16) befestigt ist, **dadurch gekennzeichnet, dass** zumindest eine der Lagerbuchsen (36A, 36B) in Hüllrohrlängsrichtung gegenüber dem Mittelrohr (32) verlagerbar ist.

2. Rolloanordnung (14) nach Anspruch 1, **dadurch gekennzeichnet, dass** die Hüllrohranordnung (30) mit einem drehfest an das Mittelrohr (32) angebundenen Koppelelement (34A, 34B) versehen ist, das die Lagerbuchse (36A, 36B), die gegenüber dem Mittelrohr (32) in Hüllrohrlängsrichtung verlagerbar ist, mit dem Mittelrohr (32) verbindet.

3. Rolloanordnung (14) nach Anspruch 1 oder 2, **dadurch gekennzeichnet, dass** die Lagerbuchse (36A, 36B) mindestens ein Führungselement umfasst, das in eine Führungsbahn (52) des Koppelelements (34A, 34B) oder des Mittelrohrs eingreift.

4. Rolloanordnung (14) nach Anspruch 3, **dadurch gekennzeichnet, dass** das Führungselement von einer hakenförmigen, federelastischen Führungslasche (48) gebildet ist.

5. Rolloanordnung (14) nach einem der Ansprüche 1 bis 4, **dadurch gekennzeichnet, dass** die Lagerbuchse (36A, 36B), die gegenüber dem Mittelrohr (32) in Hüllrohrlängsrichtung verlagerbar ist, ein Außenprofil (46) aufweist, das in ein Innenprofil des Koppelelements (34A, 34B) oder des Mittelrohrs eingreift.

6. Rolloanordnung (14) nach einem der Ansprüche 1 bis 5, **dadurch gekennzeichnet, dass** die Lagerbuchse (36A), die gegenüber dem Mittelrohr (32) in Hüllrohrlängsrichtung verlagerbar ist, einen Ringbund (56) aufweist, über den sich die Lagerbuchse (36A) an einer fahrzeugfesten Stützfläche abstützt.

7. Rolloanordnung (14) nach einem der Ansprüche 1 bis 6, **dadurch gekennzeichnet, dass** die Wickelwelle (20) eine Wickelfeder (62) umfasst, die einerseits mit der Lagerstrebe (22) und andererseits mit der Hüllrohranordnung (30) verbunden ist.

8. Rolloanordnung (14) nach Anspruch 7, **dadurch gekennzeichnet, dass** die Wickelfeder (62) an der Lagerbuchse (36A), die in Hüllrohrlängsrichtung gegenüber dem Mittelrohr (32) verlagerbar ist, befestigt ist.

9. Rolloanordnung (14) nach einem der Ansprüche 1 bis 8, **dadurch gekennzeichnet, dass** die Lagerstrebe (22) gekrümmt ausgebildet ist.

## Claims

1. A roller blind arrangement (14) for a motor vehicle, the roller blind arrangement comprising a roller blind web (16) which has a guiding tape (28A, 28B) at each of its lateral edges on either side of a longitudinal centre plane of the roller blind, a winding shaft (20) onto which the roller blind web (16) can be wound or from which the roller blind web (16) can be unwound and which comprises a flexible hollow tube arrangement (30) penetrated by a vehicle-attached mounting beam (22) and comprising a flexible middle tube (32) which is provided with a bearing bush (36A, 36B) in a co-rotating manner on each of its two ends, one of the guiding tapes (28A, 28B) of the roller blind web (16) being attached to each bearing bush (36A, 36B), **characterised in that** at least one of the bearing bushes (36A, 36B) can shift relative to the middle tube (32) in the longitudinal direction of the hollow tube.

2. The roller blind arrangement (14) according to claim 1, **characterised in that** the hollow tube arrangement (30) is provided with a coupling element (34A, 34B) which is connected to the middle tube (32) in a co-rotating manner, the coupling element (34A, 34B) connecting the bearing bush (36A, 36B) that can shift relative to the middle tube (32) in the longitudinal direction of the hollow tube to the middle tube (32).

3. The roller blind arrangement (14) according to claim 1 or 2, **characterised in that** the bearing bush (36A, 36B) comprises at least one guiding element which engages into a guiding track (52) of the coupling element (34A, 34B) or of the middle tube.

4. The roller blind arrangement (14) according to claim 3, **characterised in that** the guiding element is formed by a hook-shaped resilient guiding tab (48).

5. The roller blind arrangement (14) according to any one of the claims 1 to 4, **characterised in that** the bearing bush (36A, 36B) that can shift relative to the middle tube (32) in the longitudinal direction of the hollow tube has an outer profile (46) which engages into an inner profile of the coupling element (34A, 34B) or of the middle tube.

6. The roller blind arrangement (14) according to any one of the claims 1 to 5, **characterised in that** the bearing bush (36A) that can shift relative to the middle tube (32) in the longitudinal direction of the hollow tube has an annular collar (56) via which the bearing bush (36A) is supported on a vehicle-attached support surface.

7. The roller blind arrangement (14) according to any one of the claims 1 to 6, **characterised in that** the winding shaft (20) comprises a winding spring (62) which is connected to the mounting beam (22) at one side and to the hollow tube arrangement (30) at the other side.

8. The roller blind arrangement (14) according to claim 7, **characterised in that** the winding spring (62) is attached to the bearing bush (36A) that can shift relative to the middle tube (32) in the longitudinal direction of the hollow tube.

9. The roller blind arrangement (14) according to any one of the claims 1 to 8, **characterised in that** the mounting beam (22) is curved.

## Revendications

1. Ensemble de store (14) pour un véhicule automobile, ledit ensemble de store comprenant un store (16) qui présente une bande de guidage (28A, 28B) à chacune de ses bordures latérales de chaque côté d'un plan central longitudinal du store, un arbre d'enroulement (20) sur lequel le store (16) peut être enroulé ou duquel le store (16) peut être déroulé et qui comprend un ensemble de gaine (30) flexible pénétré par une potence de palier (22) fixée au véhicule et comprenant un tube central (32) flexible qui est pourvu d'une douille de palier (36A, 36B) de façon solidaire en rotation sur chacune de ses extrémités, une parmi les bandes de guidage (28A, 28B) du store (16) étant fixée à chaque douille de palier (36A, 36B), **caractérisé en ce qu'**au moins une parmi les douille s de palier (36A, 36B) est déplaçable par rapport au tube central (32) dans la direction longitudinale de la gaine.

2. Ensemble de store (14) selon la revendication 1, **caractérisé en ce que** l'ensemble de gaine (30) est pourvue d'un élément de couplage (34A, 34B) qui est relié avec le tube central (32) de façon solidaire en rotation et qui relie la douille de palier (36A, 36B), qui est déplaçable par rapport au tube central (32) dans la direction longitudinale de la gaine, avec le tube central (32).

3. Ensemble de store (14) selon la revendication 1 ou 2, **caractérisé en ce que** la douille de palier (36A, 36B) comprend au moins un élément de guidage qui s'engage dans une voie de guidage (52) de l'élément de couplage (34A, 34B) ou du tube central.

4. Ensemble de store (14) selon la revendication 3, **caractérisé en ce que** l'élément de guidage est formé par une éclisse de guidage (48) résilient en forme de crochet.

5. Ensemble de store (14) selon l'une quelconque des revendications 1 à 4, **caractérisé en ce que** la douille de palier (36A, 36B), qui est déplaçable par rapport au tube central (32) dans la direction longitudinale de la gaine, présente un profil extérieur (46) qui s'engage dans un profil intérieur de l'élément de couplage (34A, 34B) ou du tube central.

6. Ensemble de store (14) selon l'une quelconque des revendications 1 à 5, **caractérisé en ce que** la douille de palier (36A), qui est déplaçable par rapport au tube central (32) dans la direction longitudinale de la gaine, présente une frette annulaire (56) par lequel la douille de palier (36A) est supportée sur une surface de support fixée au véhicule.

7. Ensemble de store (14) selon l'une quelconque des revendications 1 à 6, **caractérisé en ce que** l'arbre d'enroulement (20) comprend un ressort d'enroulement (62) qui est relié avec la potence de palier (22) d'un côté et avec l'ensemble de gaine (30) de l'autre côté.

8. Ensemble de store (14) selon la revendication 7, **caractérisé en ce que** le ressort d'enroulement (62) est fixé à la douille de palier (36A) qui est déplaçable par rapport au tube central (32) dans la direction longitudinale de la gaine.

9. Ensemble de store (14) selon l'une quelconque des revendications 1 à 8, **caractérisé en ce que** la potence de palier (22) est courbée.
